# EUROPEAN PATENT SPECIFICATION

(11) **EP 4 276 767 B1**
(45) Date of publication and mention of the grant of the patent: **21.01.2026**
(21) Application number: 22461550.0
(22) Date of filing: 12.05.2022
(51) Int. Cl.: G06V 10/82, G06V 20/69

(54) **A METHOD AND A SYSTEM FOR IDENTIFYING POLYCULTURE BACTERIA ON MICROSCOPIC IMAGES USING DEEP LEARNING**
VERFAHREN UND SYSTEM ZUM IDENTIFIZIEREN VON BAKTERIEN IN POLYKULTUREN AUF MIKROSKOPISCHEN BILDERN MITTELS TIEFENLERNEN
PROCÉDÉ ET SYSTÈME PERMETTANT D'IDENTIFIER DES BACTÉRIES DE POLYCULTURE SUR DES IMAGES MICROSCOPIQUES À L'AIDE DE L'APPRENTISSAGE PROFOND

(43) Date of publication of application: 15.11.2023
(73) Proprietor: Uniwersytet Jagiellonski, 31-007 Krakow (PL)
(72) Inventor: ZIELINSKI, Bartosz, 31-514 Krakow (PL); BOROWA, Adriana, 30-348 Krakow (PL); RYMARCZYK, Dawid, 30-383 Krakow (PL); BRZYCHCZY-WLOCH, Monika, 31-864 Krakow (PL); OCHONSKA, Dorota, 32-020 Wieliczka (PL); SROKA-OLEKSIAK, Agnieszka, 30-349 Krakow (PL)
(74) Representative: Kancelaria Eupatent.pl Sp. z o.o.

(56) References cited:
- WAHID MD FERDOUS ET AL: "Performance Analysis of Machine Learning Techniques for Microscopic Bacteria Image Classification", 2019 10TH INTERNATIONAL CONFERENCE ON COMPUTING, COMMUNICATION AND NETWORKING TECHNOLOGIES (ICCCNT), IEEE, 6 July 2019 (2019-07-06), pages 1 - 4, XP033681110
- BOROWA ADRIANA ET AL: "Deep learning classification of bacteria clones explained by persistence homology", 2021 INTERNATIONAL JOINT CONFERENCE ON NEURAL NETWORKS (IJCNN), IEEE, 18 July 2021 (2021-07-18), pages 1 - 8, XP033974038, DOI: 10.1109/IJCNN52387.2021.9533954

## Description

### TECHNICAL FIELD

The present disclosure generally relates to identification of polyculture bacteria on microscopic images using deep learning.

### BACKGROUND

Typical methods for microbiology diagnostics aimed at identifying pathogenic microorganisms may take several days or weeks. A classical diagnostics procedure includes collecting a biological sample and cultivation of the sample on artificial medium with specific substrates (temperature, oxygen level, time of cultivation). Initially, the microorganisms are assessed by determining the cultivated colonies, and also based on Gram stained microscopic samples. In view of visual similarities of various species, it is not possible to identify a particular species of bacteria or yeast-like fungi. Therefore, further procedures must be carried out, such as isolating colonies or microorganisms, separating them on selective and differential agar medium, repeating the incubation and identifying species based on tests based on biochemical reactions and/or serological tests. In that procedure, it is possible that a mix of species is cultivated, therefore the procedure may be even longer.

There are also known other methods, such as methods based on detection of nucleotide acids (mostly PCR (*polymerase chain reaction)* or real-time PCR tests) or detection of unique microorganism proteins (Matrix Assisted Laser Desorption/Ionization Time-of-Flight (MALDI-TOF) Mass Spectrometry). These methods are relatively costly and require specific equipment.

There are also known methods that use machine learning techniques to classify bacteria. For example, such methods are disclosed in the following publications:
- PALMA, Susana ICJ, et al. Machine learning for the meta-analyses of microbial pathogens' volatile signatures. Scientific reports, 2018, 8.1: 1-15.
- QU, Kaiyang, et al. Application of machine learning in microbiology. Frontiers in microbiology, 2019, 10: 827.
- PEIFFER-SMADJA, Nathan, et al. Machine learning in the clinical microbiology laboratory: has the time come for routine practice?. Clinical Microbiology and Infection, 2020, 26.10: 1300-1309.
- ZHANG, Yang, et al. Deep Learning for Imaging and Detection of Microorganisms. Trends in Microbiology, 2021.
- ZHENG, Lingling, et al. Machine Learning Algorithms Identify Pathogen-Specific Biomarkers of Clinical and Metabolomic Characteristics in Septic Patients with Bacterial Infections. BioMed research international, 2020, 2020.
- GOODSWEN, Stephen J., et al. Machine learning and applications in microbiology. FEMS Microbiology Reviews, 2021.

However, each these prior art methods suffers from at least one of the following disadvantages: requires costly data acquisition processes, determines a limited number of bacteria or does not return an explanation of the prediction result.

JP2020123044 discloses classification means for classifying a bacterium from an image of the bacterium by learning the relationship between the result of the classification of the bacterium performed by a person based on the image of the bacterium contained in the image of the Gram-stained sample and the characteristics of the image of the bacterium.

US2021130868A1 discloses a method for deep learning video microscopy-based antimicrobial susceptibility testing of a bacterial strain in a sample by acquiring image sequences of individual bacterial cells of the bacterial strain in a subject sample before, during, and after exposure to each antibiotic at different concentrations.

CN112861627A discloses a method and system for identifying types of pathogenic bacteria based on a microscopic hyperspectral technology. The identification method comprises the following steps: 1) acquiring original hyperspectral data of a pathogenic bacterium sample to be detected; 2) carrying out whitening treatment; 3) carrying out principal component analysis; 4) inputting the principal component image into a pre-established and trained convolutional neural network model, wherein according to the convolutional neural network model, various pathogenic bacteria samples of known types are taken, the previous steps are referred in sequence, and then a model is established and trained based on a principal component image; and 5) outputting a pathogenic bacterium species identification result through the convolutional neural network model.

Wahid et al., in their article titled "Performance Analysis of Machine Learning Techniques for Microscopic Bacteria Image Classification," disclose a method for the classification of bacteria in microscopic images. This method employs a convolutional neural network to generate a representations matrix of the microscopic images, which is subsequently flattened into a vector form. This vector serves as the input for species classifiers. It is important to note, however, that the disclosed method only permits the classification of bacterial species in images containing bacteria of a single species.

Similarly, Borowa et al., in their article titled "Deep Learning Classification of Bacteria Clones Explained by Persistence Homology," disclose a method for the classification of bacterial clones in microscopic images. However, this method only facilitates the identification of different clones of bacteria belonging to a single species.

### SUMMARY OF THE INVENTION

In view of the drawbacks of the prior art, there is a need to provide alternative methods for identification of polyculture bacteria.

The invention is defined by the set of appended claims. The present invention is based on deep multiple instances learning (multi-MIL) to classify and identify particular bacteria on a microscopic image of a specimen containing different bacteria species.

The object of the invention is a computer-implemented method and system for identifying polyculture bacteria on a microscopic image, according to the appended claims.

The method of the invention allows to classify bacteria with a high accuracy and allows to shorten the time necessary to identify the microorganisms.

These and other features, aspects and advantages of the invention will become better understood with reference to the following drawings, descriptions and claims.

### BRIEF DESCRIPTION OF DRAWINGS

Various embodiments are herein described, by way of example only, with reference to the accompanying drawings, wherein:
Fig. 1 shows schematically components and data of a patches processing module for generating patch features vectors for patches of input image;
Fig. 2 shows schematically a method for training the patches processing module for generating patch features vectors for patches of input image;
Fig. 3 shows an example input image with many polyculture bacteria;
Fig. 4A shows a first example of a patch of the input image;
Fig. 4B shows a second example of a patch of the input image;
Fig. 4C shows a third example of a patch of the input image,
Fig. 5 shows schematically components and data of a module for generating a prediction for an input image;
Fig. 6 shows schematically a method for training of the module for generating a prediction for an input image;
Fig. 7 shows schematically a method for identifying the polyculture bacteria;
Fig. 8 shows a structure of a computer-implemented system for handling the methods presented herein.

### DETAILED DESCRIPTION

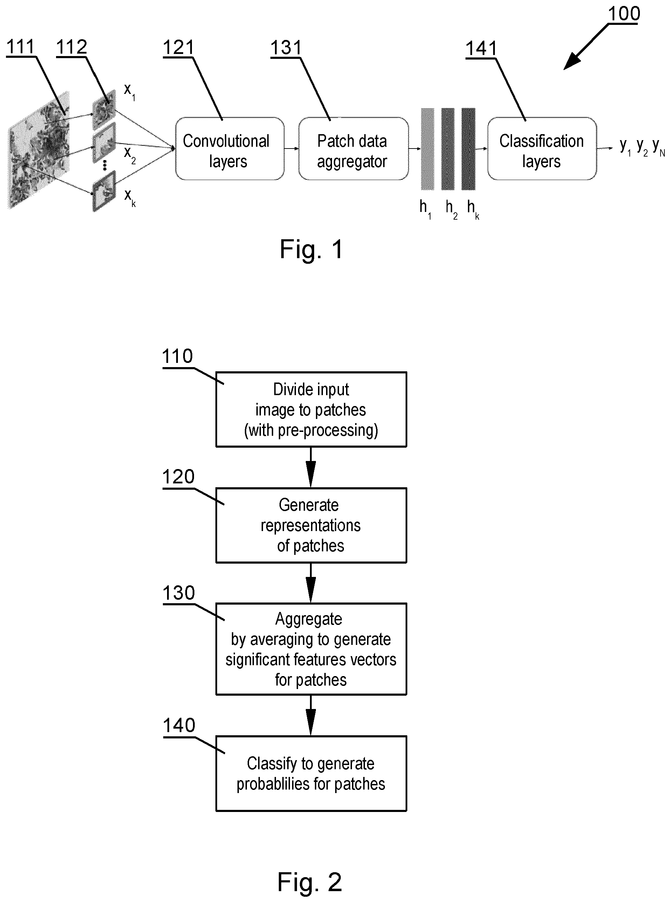

Fig. 1 shows schematically components and data of a patches processing module 100 for generating patch features vectors for patches of input image and Fig. 2 shows a method for training that module.

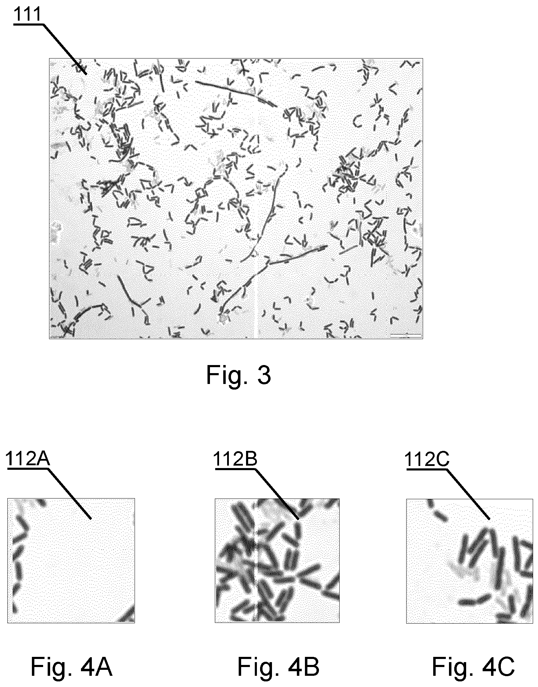

In step 110 an input image 111 (as shown for example in Fig. 3) which may comprise multiple polyculture bacteria is divided into patches 112 (examples 112A, 112B, 112C of different patches are shown in Figs. 4A-4C). For example, each patch may have a size of 250x250 pixels, wherein each pixel is represented by a color value in RGB color space. The patches may partially overlap each other (for example, by 50% of their width and height) or may be adjacent to each other, depending on the desired degree of detail of processing data.

The step 110 of dividing the input image may further contain pre-processing of the input image, such as reduction of the size of the image.

Moreover, step 110 may further comprise pre-processing of the patches, for example by rejecting patches that are less useful for classification than others. For example, a standard deviation (std) between average values of colours in each channel of the RGB color space is calculated for each patch. Patches having low std value (for example, lower than 2.25, which indicates a patch which is almost empty, such as a patch 112A as shown in Fig. 4A) or high value (for example, higher than 13.5, which indicates a patch that contains lots of bacteria overlapping each other, wherein individual bacteria are undetectable, such as a patch 112B shown in Fig. 4B). Only patches having moderate std values (for example, between 2.25 and 13.5, which indicates that individual bacteria can be detected, such as a patch 112C shown in Fig. 4C) are selected for processing in further steps. Next, each selected patch may be subject to normalization, for example by means of an average and standard deviation determined for a set of random 10000 patches of other input images that have std values in the range of 2,25<std<13,5. For example, the normalized value can be calculated as ratio of a [difference between the current value and a mean value] and the std value, i.e. (current-mean)/std.

A set of k patches (wherein k is the number of patches in the set) output from step 110 is input in step 120 to a convolutional layers 121 of a patches processing neural network, in order to generate representation of patches. For example, the patches processing neural network may be ResNet (such as ResNet-50, ResNeXt-50), VGG, DenseNet, InceptioNet or SwinTransformer. The patches processing neural network generates representations of patches in a form of a matrix of representations. The output is represented as a set of k matrices of representations of patches, wherein each matrix has a size of HxWxD, wherein H and W are sizes of representation of patch within the patches processing neural network and D is a number of channels. For example, H and W may have a value of 8, and D can be 512. The values can depend on the architecture of neural network used.

In step 130 the set of k matrices of representations of patches is input to a patch data aggregator 131 that is configured to generate k patch features vectors h₁, h₂, ..., hₖ (i.e. one patch features vector h per each of the k patches), for example by means of 2D average pooling. Each patch features vector hi, h₂, ..., hₖ has a size of D, wherein each value within the patch features vector hi, h₂, ..., hₖ represents high-level features of a patch considered as significant. Therefore, the aggregator outputs the patch features vectors h₁, h₂, ..., hₖ(which may be also called a hidden representation for patches).

The set of k patch features vectors hi, h₂, ..., hₖ is then input in step 140 to classification layers 141 of a features vectors processing neural network, in order to generate k sets of N probabilities y₁, y₂, ..., y_{N} that a particular patch represents a particular species of bacteria. For example, the features vectors processing neural network may be a ResNet-18 network with a single linear layer that is configured to change a k x 512 vector to a k x number_of_classes vector. The classification layers are preferably linear layers. Therefore, step 140 performs classification of bacteria on the patches.

During the training, a loss function is used to correct network parameters. For this purpose, the mechanism of back propagation of error is used.

The procedure is performed for multiple input images containing one or more species of N bacteria to be classified. Namely, some input images used for training may contain only bacteria of a single species, some other input images may contain bacteria of two or more species. Moreover, for each imaged specimen a plurality of images can be prepared, each imaged from a different viewpoint.

As a result, the module 100 is trained to generate the patch features vectors h₁, h₂, ..., hₖ for patches of input image containing one or more species of bacteria to be classified and corresponding probabilities y₁, y₂, ..., y_{N} that a particular patch represents a particular species of bacteria.

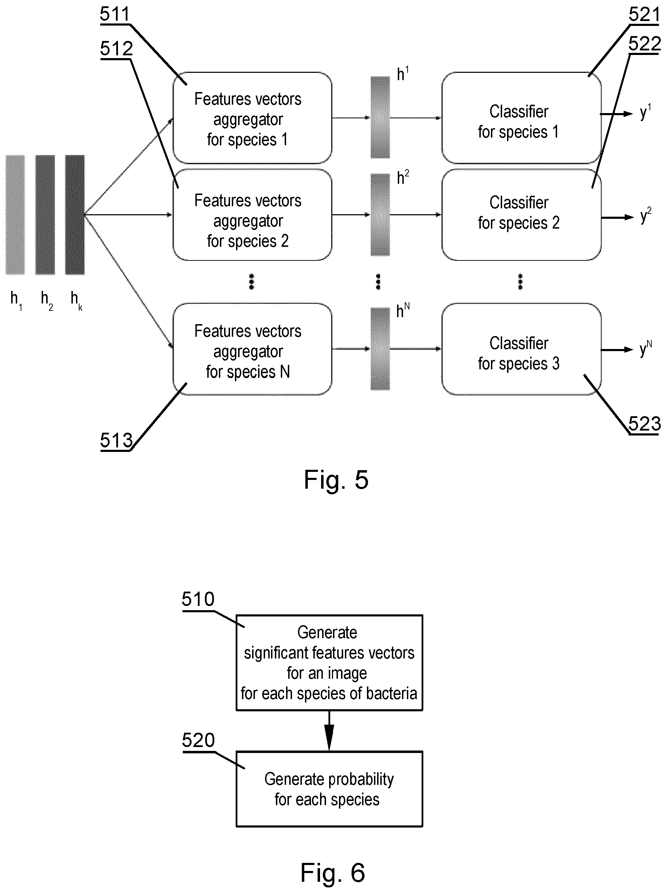

Fig. 5 shows schematically components and data of a module 500 for generating a prediction for an input image and Fig. 6 shows a procedure for training that module.

In step 510, patch features vectors h₁, h₂, ..., hₖ for patches of an image, as obtained at the output of step 130, are input to selected N features vectors aggregators 511-513. Each of the aggregators 511-513 is configured for a distinct species of all of the N species to be classified. The patch features vectors hi, h₂, ..., hₖ for patches are directed to those aggregators 511-513. Each features vectors aggregator 511-513 calculates a species features vector h¹, h², ..., h^{N} for bacteria species for the processed image (i.e. each aggregator 511-513 calculates a single vector for the species of bacteria corresponding to that aggregator 511-513), having the same dimension D as the patch features vectors hi, h₂, ..., hₖ for patches. It is calculated as a weighted average of the patch features vectors h₁, h₂, ..., hₖ for patches that have been input to that aggregator 511-513. For this purpose, one can use Attention-based Multiple Instance Learning or other methods returning weights for the features vectors h₁, h₂, ..., hₖ.

A skilled person will realize that step 510 can be also performed by alternative techniques, such as aggregating by average, Attention Pooling, Self-Attention Attention Pooling, Loss Attention, TransMIL, Swin Transformer, or Vision Transformer with Focal Attention.

In step 520, each of the species features vectors h¹, h², ..., h^{N} for bacteria species is input to a corresponding species classifier 521-523 configured to generate a probability y¹, y², ..., y^{N} that the image contains the particular species of bacteria. For example, each of the species classifier 521-523 can be realized as a shallow neural network having a low number (e.g. five) of linear hidden layers.

A loss function is used to correct network parameters during training. For this purpose, the mechanism of back propagation of error is used.

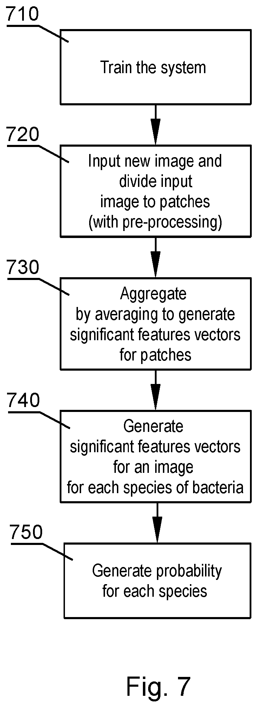

Fig. 7 shows schematically a method for identifying the polyculture bacteria. First, in step 710, the system is trained with manually-labelled images as described above with respect to methods of Figs. 2 and 6 in order to train the neural network modules 121, 141, 511-513, 521-523.

Next, in step 720, an input image 111 to be analyzed is provided as input and divided to patches 112, with pre-processing as described with reference to step 110.

Next, in step 730, the patches 112 are input to convolutional layers 121 of the patches processing neural network to generate the set of k matrices of representations of patches, as described with reference to step 120.

In step 740, the set of k matrices of representations of patches is input to the patch data aggregator 131 to generate patch features vectors h₁, h₂, ..., hₖ for patches, as described with reference to step 130.

In step 750, the patch features vectors h₁, h₂, ..., hₖ for patches of the image are input to selected N features vectors aggregators 511-513 in order to calculate species features vectors h¹, h², ..., h^{N} corresponding to bacteria species for the whole processed image. The procedure is similar as in 510.

Next, in step 760, the species features vectors h¹, h², ..., h^{N} for bacteria species for the processed image are input to the species classifiers 521-523 in order to generate a probability y¹, y², ..., y^{N} that the image contains the particular species of bacteria - which is provided as a result of the identification of the polyculture bacteria within the input image.

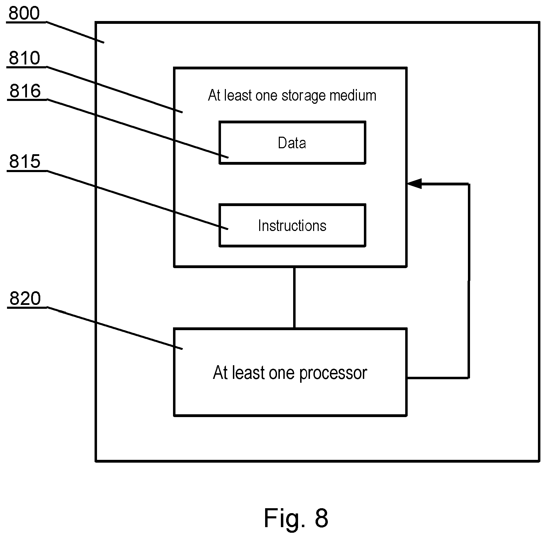

Fig. 8 shows a structure of a computer-implemented system 800 for handling the methods presented herein. The system may include at least one non-transitory processor-readable storage medium 810 that stores at least one of processor-executable instructions 815 or data 816 and at least one processor 820 communicably coupled to the at least one non-transitory processor-readable storage medium 810. The at least one processor 820 is configured to (by executing the instructions 815) perform the steps of any of the methods presented in Figs. 2, 6 and 7 and to emulate modules of Figs. 1 and 5.

### Example embodiment

An example system for identifying four types of bacteria has been implemented as follows.

The system was trained to identify N=4 species of bacteria: *Escherichia coli, Staphylococcus aureus, Neisseria gonorrhoeae* and *Lactobacillus plantarum* (these species were selected due to the differences in morphology and classical Gram staining method). In order to simulate a natural environment, wherein a single specimen might contain different species, also belonging to different types, the above-mentioned bacteria species were applied together on a microscopic slide (specimens of 12 combinations of species plus specimens of individual species). Next, the specimens were fixed and stained with a typical Grama stain. 12 combinations of species were prepared (including individual species). Two different specimens of each kind were imaged, each specimen imaged by 10 images taken from different viewpoints. In total, 240 images were obtained for combinations of species and 80 images for individual species.

The images were then divided into 200 patches each, and each patch was manually described to identify all species which were present on the initial image. Namely for an image containing a single species each patch was described as containing that particular species, and for an image containing two species each patch was described as containing that particular species, regardless of which species were present in that particular patch. As a result, a database of 60400 image patches with descriptions was obtained as a training set. The neural network modules 121, 141, 511-513, 521-523 were then trained by the training set according to the procedures of Figs. 2 and 6.

Such trained system is ready to process images in order to classify the four bacteria species according to the procedure of Fig. 7.

## Claims

1. A computer-implemented method for identifying polyculture bacteria on a microscopic image, the method comprising:
- providing (710) a computer system comprising:
- a patches processing neural network with convolutional layers (121) configured to receive patches of the microscopic image and generate a representation of patches in a form of a set of three dimensional matrices of representations, wherein each matrix has a size of HxWxD, wherein H and W are sizes of representation of patches within the patches processing neural network and D is a number of channels;
- a patch data aggregator (131) configured to receive the representation of patches and to generate patch features vectors (h₁, h₂, ..., hₖ) for the patches, wherein each value within the patch features vectors represents high-level features of the patch, wherein patch features vectors have a size D which is equal to number of channels from representation of patch;
- receiving (720) the microscopic image (111) to be analyzed and dividing the microscopic image (111) to be analyzed to patches (112);
- inputting (730) the patches (112) to the convolutional layers (121) of the patches processing neural network to generate a set of matrices of representations of patches;
- inputting (740) the set of matrices of representations of patches to the patch data aggregator (131) to generate the patch features vectors (h₁, h₂, ..., hₖ) for patches;
**characterized in that**,
- the computer system further comprises:
- a plurality of features vectors aggregators (511-513) configured to receive patch features vectors (h₁, h₂, ..., hₖ) and to calculate species features vectors (h¹, h², ..., h^{N}) corresponding to bacteria species for the image, wherein each of the features vectors aggregators (511-513) is configured for a distinct species of all of the species to be classified, wherein species features vectors have a size D which is equal to size of patch features vectors, wherein species features vectors are calculated as a weighted average of the patch features vectors; and
- a plurality of species classifiers (521-523) configured to receive the species features vectors (h¹, h², ..., h^{N}) corresponding to bacteria species for the image and to generate a probability (y¹, y², ..., y^{N}) that the image contains the particular species of bacteria; and
- the method further comprises steps of: inputting (750) the patch features vectors (h₁, h₂, ..., hₖ) for patches to the features vectors aggregators (511-513) to calculate species features vectors (h¹, h², ..., h^{N}) corresponding to bacteria species for the image; and
- inputting (760) the species features vectors (h¹, h², ..., h^{N}) corresponding to bacteria species for the image to the species classifiers (521-523) to generate a probability (y¹, y², ..., y^{N}) that the image contains the particular species of bacteria.

2. The method according to claim 1, wherein the computer system further comprises a features vectors processing neural network with classification layers (141) configured to receive the patch features vectors (h₁, h₂, ..., hₖ) for patches and to generate probabilities (y₁, y₂, ..., y_{N}) that a particular patch represents a particular species of bacteria; and wherein the system is pre-trained by:
- providing (110) a training input microscopic image (111) representing known polyculture bacteria and dividing the training input microscopic image to patches (112);
- inputting (120) the patches (112) to the convolutional layers (121) of the patches processing neural network to generate a set of matrices of representations of patches;
- inputting (130) the set of matrices of representations of patches to the patch data aggregator (131) to generate patch features vectors (h₁, h₂, ..., hₖ) for patches;
- inputting (140) the patch features vectors (h₁, h₂, ..., hₖ) for patches to classification layers (141) of the features vectors processing neural network to generate probabilities (y₁, y₂, ..., y_{N}) that a particular patch represents a particular species of bacteria;
- inputting (510) the patch features vectors (h₁, h₂, ..., hₖ) for patches to the features vectors aggregators (511-513) to calculate the species features vectors (h¹, h², ..., h^{N} ) corresponding to bacteria species for the training input microscopic image; and
- inputting (520) the species features vectors (h¹, h², ..., h^{N} ) corresponding to bacteria species for the training input microscopic image to the corresponding species classifier (521-523) to generate a probability (y¹, y², ..., y^{N}) thatthe training input microscopic image contains the particular species of bacteria;
- while using a mechanism of back propagation of error during the training process.

3. The method according to any of previous claims, further comprising pre-processing (110, 720) the microscopic image to calculate a standard deviation (std) between average values of colours in each channel of the RGB color space for each patch and rejecting patches having a standard deviation value outside a predefined threshold range.

4. A computer-implemented system (800) configured to perform the method according to any of previous claims.

## Patentansprüche

1. Computerimplementiertes Verfahren zur Identifizierung von Polykulturbakterien auf einem mikroskopischen Bild, umfassend die Schritte:
- Bereitstellen (710) eines Computersystems, das aufweist:
- ein Patches-verarbeitendes neuronales Netzwerk mit Faltungsschichten (121), die dazu konfiguriert sind, Patches des mikroskopischen Bildes zu empfangen und eine Darstellung der Patches in Form einer Menge dreidimensionaler Darstellungsmatrizen zu erzeugen, wobei jede Matrix eine Größe von H×W×D aufweist, wobei H und W die Abmessungen der Patch-Darstellung innerhalb des Patches-verarbeitenden neuronalen Netzwerks sind und D eine Anzahl von Kanälen ist;
- einen Patch-Datenaggregator (131), der dazu konfiguriert ist, die Darstellung der Patches zu empfangen und Patch-Merkmalsvektoren (h₁, h₂, ..., hₖ) für die Patches zu erzeugen, wobei jeder Wert innerhalb der Patch-Merkmalsvektoren höherstufige Merkmale des jeweiligen Patches darstellt und wobei die Patch-Merkmalsvektoren eine Größe D aufweisen, die der Anzahl der Kanäle der Patch-Darstellung entspricht;
- Empfangen (720) des zu analysierenden mikroskopischen Bildes (111) und Aufteilen des zu analysierenden mikroskopischen Bildes (111) in Patches (112);
- Eingeben (730) der Patches (112) in die Faltungsschichten (121) des Patches-verarbeitenden neuronalen Netzwerks, um eine Menge von Darstellungsmatrizen der Patches zu erzeugen;
- Eingeben (740) der Menge von Darstellungsmatrizen der Patches in den Patch-Datenaggregator (131), um die Patch-Merkmalsvektoren (h₁, h₂, ..., hₖ) für die Patches zu erzeugen;
**dadurch gekennzeichnet, dass**
- das Computersystem ferner aufweist:
- eine Mehrzahl von Merkmalsvektor-Aggregatoren (511-513), die dazu konfiguriert sind, Patch-Merkmalsvektoren (h₁, h₂, ..., hₖ) zu empfangen und Spezies-Merkmalsvektoren (h¹, h², ..., h^{N}) zu berechnen, die den Bakterienspezies für das Bild entsprechen, wobei jeder der Merkmalsvektor-Aggregatoren (511-513) für eine jeweilige unterschiedliche Bakterienspezies unter allen zu klassifizierenden Bakterienspezies konfiguriert ist, wobei die Spezies-Merkmalsvektoren eine Größe D aufweisen, die der Größe der Patch-Merkmalsvektoren entspricht, und wobei die Spezies-Merkmalsvektoren als gewichteter Mittelwert der Patch-Merkmalsvektoren berechnet werden; und
- eine Mehrzahl von Speziesklassifikatoren (521-523), die dazu konfiguriert sind, die Spezies-Merkmalsvektoren (h¹, h², ..., h^{N}), die den Bakterienspezies für das Bild entsprechen, zu empfangen und eine Wahrscheinlichkeit (y¹, y², ..., y^{N}) zu erzeugen, dass das Bild die jeweilige Bakterienspezies enthält; und
- wobei das Verfahren ferner die Schritte umfasst:
- Eingeben (750) der Patch-Merkmalsvektoren (h₁, h₂, ..., hₖ) für die Patches in die Merkmalsvektor-Aggregatoren (511-513), um Spezies-Merkmalsvektoren (h¹, h², ..., h^{N}) zu berechnen, die den Bakterienspezies für das Bild entsprechen; und
- Eingeben (760) der Spezies-Merkmalsvektoren (h¹, h², ..., h^{N}), die den Bakterienspezies für das Bild entsprechen, in die Speziesklassifikatoren (521-523), um eine Wahrscheinlichkeit (y¹, y², ..., y^{N}) zu erzeugen, dass das Bild die jeweilige Bakterienspezies enthält.

2. Verfahren nach Anspruch 1, wobei das Computersystem ferner ein Merkmalsvektorverarbeitendes neuronales Netzwerk mit Klassifizierungsschichten (141) umfasst, das dazu konfiguriert ist, die Patch-Merkmalsvektoren (h₁, h₂, ..., hₖ) für die Patches zu empfangen und Wahrscheinlichkeiten (y¹, y², ..., y^{N}) zu erzeugen, dass ein bestimmter Patch eine bestimmte Bakterienspezies darstellt, und wobei das System vorab trainiert wird durch:
- Bereitstellen (110) eines mikroskopischen Trainingsbildes (111), das bekannte Polykulturbakterien darstellt, und Aufteilen des mikroskopischen Trainingsbildes in Patches (112);
- Eingeben (120) der Patches (112) in die Faltungsschichten (121) des Patches-verarbeitenden neuronalen Netzwerks, um eine Menge von Darstellungsmatrizen der Patches zu erzeugen;
- Eingeben (130) der Menge von Darstellungsmatrizen der Patches in den Patch-Datenaggregator (131), um Patch-Merkmalsvektoren (h₁, h₂, ..., hₖ) für die Patches zu erzeugen;
- Eingeben (140) der Patch-Merkmalsvektoren (h₁, h₂, ..., hₖ) für die Patches in die Klassifizierungsschichten (141) des Merkmalsvektor-verarbeitenden neuronalen Netzwerks, um Wahrscheinlichkeiten (y¹, y², ..., y^{N}) zu erzeugen, dass ein bestimmter Patch eine bestimmte Bakterienspezies darstellt;
- Eingeben (510) der Patch-Merkmalsvektoren (h₁, h₂, ..., hₖ) für die Patches in die Merkmalsvektor-Aggregatoren (511-513), um die Spezies-Merkmalsvektoren (h¹, h², ..., h^{N}) zu berechnen, die den Bakterienspezies für das mikroskopische Trainingsbild entsprechen; und
- Eingeben (520) der Spezies-Merkmalsvektoren (h¹, h², ..., h^{N}), die den Bakterienspezies für das mikroskopische Trainingsbild entsprechen, in die entsprechenden Speziesklassifikatoren (521-523), um eine Wahrscheinlichkeit (y¹, y², ..., y^{N}) zu erzeugen, dass das mikroskopische Trainingsbild die jeweilige Bakterienspezies enthält;
- wobei während des Trainingsprozesses ein Mechanismus der Fehlerrückpropagierung verwendet wird.

3. Verfahren nach einem der vorhergehenden Ansprüche, ferner umfassend die Vorverarbeitung (110, 720) des mikroskopischen Bildes, um eine Standardabweichung (std) zwischen den Durchschnittswerten der Farben in jedem Kanal des RGB-Farbraums für jeden Patch zu berechnen und Patches mit einem Standardabweichungswert außerhalb eines vordefinierten Schwellenbereichs zurückzuweisen.

4. Computerimplementiertes System (800), das so konfiguriert ist, dass es das Verfahren nach einem der vorhergehenden Ansprüche ausführt.

## Revendications

1. Procédé mis en œuvre par ordinateur pour identifier des bactéries en polyculture sur une image microscopique, le procédé comprenant :
- fournir (710) un système informatique comprenant :
- un réseau neuronal de traitement de patchs, comprenant des couches convolutives (121) configurées pour recevoir des patchs de l'image microscopique et générer une représentation des patchs sous la forme d'un ensemble de matrices de représentation tridimensionnelles, chaque matrice présentant une taille H×W×D, H et W étant les tailles de représentation des patchs dans le réseau neuronal de traitement de patchs et D étant un nombre de canaux ;
- un agrégateur de données de patchs (131) configuré pour recevoir la représentation des patchs et pour générer, pour les patchs, des vecteurs de caractéristiques de patch (h₁, h₂, ..., hₖ), chaque valeur au sein des vecteurs de caractéristiques de patch représentant des caractéristiques de haut niveau du patch, les vecteurs de caractéristiques de patch présentant une taille D égale au nombre de canaux de la représentation du patch ;
- recevoir (720) l'image microscopique (111) à analyser et diviser l'image microscopique (111) à analyser en patchs (112) ;
- fournir en entrée (730) les patchs (112) aux couches convolutives (121) du réseau neuronal de traitement de patchs afin de générer un ensemble de matrices de représentation de patchs ;
- fournir en entrée (740) l'ensemble de matrices de représentation de patchs à l'agrégateur de données de patchs (131) afin de générer les vecteurs de caractéristiques de patch (h₁, h₂, ..., hₖ) pour les patchs ;
le procédé étant **caractérisé en**
- **ce que** le système informatique comprend en outre :
- une pluralité d'agrégateurs de vecteurs de caractéristiques (511-513) configurés pour recevoir des vecteurs de caractéristiques de patch (h₁, h₂, ..., hₖ) et pour calculer des vecteurs de caractéristiques d'espèce (h¹, h², ..., h^{N}) correspondant à des espèces bactériennes pour l'image, chacun des agrégateurs de vecteurs de caractéristiques (511-513) étant configuré pour une espèce distincte parmi toutes les espèces à classer, les vecteurs de caractéristiques d'espèce présentant une taille D égale à la taille des vecteurs de caractéristiques de patch, les vecteurs de caractéristiques d'espèce étant calculés comme une moyenne pondérée des vecteurs de caractéristiques de patch ; et
- une pluralité de classificateurs d'espèce (521-523) configurés pour recevoir les vecteurs de caractéristiques d'espèce (h¹, h², ..., h^{N}) correspondant aux espèces bactériennes pour l'image et pour générer une probabilité (y¹, y², ..., y^{N}) que l'image contienne l'espèce bactérienne particulière ;
- et **en ce que** le procédé comprend en outre les étapes consistant à :
- fournir en entrée (750) les vecteurs de caractéristiques de patch (h₁, h₂, ..., hₖ) pour les patchs aux agrégateurs de vecteurs de caractéristiques (511-513) afin de calculer les vecteurs de caractéristiques d'espèce (h¹, h², ..., h^{N}) correspondant aux espèces bactériennes pour l'image ; et
- fournir en entrée (760) les vecteurs de caractéristiques d'espèce (h¹, h², ..., h^{N}) correspondant aux espèces bactériennes pour l'image aux classificateurs d'espèce (521-523) afin de générer une probabilité (y¹, y², ... y^{N}) que l'image contienne l'espèce bactérienne particulière.

2. Procédé selon la revendication 1, dans lequel le système informatique comprend en outre un réseau neuronal de traitement de vecteurs de caractéristiques, comprenant des couches de classification (141) configurées pour recevoir les vecteurs de caractéristiques de patch (h₁, h₂, ..., hₖ) pour les patchs et pour générer des probabilités (y¹, y², ..., y^{N}) qu'un patch particulier représente une espèce particulière de bactéries, et dans lequel le système est pré-entraîné par :
- la fourniture (110) d'une image microscopique d'apprentissage en entrée (111) représentant des bactéries en polyculture connues et la division de l'image microscopique d'apprentissage en entrée en patchs (112) ;
- la fourniture en entrée (120) des patchs (112) aux couches convolutives (121) du réseau neuronal de traitement de patchs afin de générer un ensemble de matrices de représentation de patchs ;
- la fourniture en entrée (130) de l'ensemble de matrices de représentation de patchs à l'agrégateur de données de patchs (131) afin de générer des vecteurs de caractéristiques de patch (h₁, h₂, ..., hₖ) pour les patchs ;
- la fourniture en entrée (140) des vecteurs de caractéristiques de patch (h₁, h₂, ..., hₖ) pour les patchs aux couches de classification (141) du réseau neuronal de traitement de vecteurs de caractéristiques afin de générer des probabilités (y¹, y², ..., y^{N}) qu'un patch particulier représente une espèce particulière de bactéries ;
- la fourniture en entrée (510) des vecteurs de caractéristiques de patch (h₁, h₂, ..., hₖ) pour les patchs aux agrégateurs de vecteurs de caractéristiques (511-513) afin de calculer les vecteurs de caractéristiques d'espèce (h¹, h², ..., h^{N}) correspondant aux espèces bactériennes pour l'image microscopique d'apprentissage en entrée ; et
- la fourniture en entrée (520) des vecteurs de caractéristiques d'espèce (h¹, h², ..., h^{N}) correspondant aux espèces bactériennes pour l'image microscopique d'apprentissage en entrée au classificateur d'espèce correspondant (521-523) afin de générer une probabilité (y¹, y², ..., y^{N}) que l'image microscopique d'apprentissage en entrée contienne l'espèce bactérienne particulière ;
- tout en utilisant un mécanisme de rétropropagation de l'erreur pendant le processus d'apprentissage.

3. Procédé selon l'une quelconque des revendications précédentes, comprenant en outre le prétraitement (110, 720) de l'image microscopique afin de calculer, pour chaque patch, un écart-type (std) entre des valeurs moyennes de couleurs dans chaque canal de l'espace colorimétrique RVB et de rejeter les patchs présentant une valeur d'écart-type en dehors d'une plage de seuil prédéfinie.

4. Système informatique (800) configuré pour mettre en œuvre le procédé selon l'une quelconque des revendications précédentes.
